# EUROPEAN PATENT APPLICATION

(11) **EP 3 972 305 A1**
(43) Date of publication of application: **23.03.2022**
(21) Application number: 20851968.6
(22) Date of filing: 10.08.2020
(51) Int. Cl.: H04W 8/24

(54) **METHOD FOR REPORTING NO GAP MEASUREMENT CAPABILITY AND APPARATUS**

(30) Priority: 14.08.2019 CN 201910750915
(71) Applicant: Huawei Technologies Co., Ltd., Longgang District Shenzhen, Guangdong 518129 (CN)
(72) Inventor: ZHENG, Delai, Shenzhen, Guangdong 518129 (CN); YANG, Jianhua, Shenzhen, Guangdong 518129 (CN); YAO, Chuting, Shenzhen, Guangdong 518129 (CN); CHEN, Yan, Shenzhen, Guangdong 518129 (CN)
(74) Representative: Roth, Sebastian
(86) International application number: PCT/CN2020/108282
(87) International publication number: WO 2021/027787

(57) **Abstract**

This application provides a no-gap measurement capability reporting method and an apparatus. The method includes: receiving, by a first device, a first message sent by a second device, where the first message is used to indicate the first device to determine gap measurement; and sending, by the first device, a second message to the second device based on the first message, where the second message is used to indicate a no-gap measurement capability. According to the method in this application, a terminal device can report a no-gap measurement capability to a network device based on different measurement objectives.

## Description

This application claims priority to Chinese Patent Application No. 201910750915.7, filed with the China National Intellectual Property Administration on August 14, 2019 and entitled "NO-GAP MEASUREMENT CAPABILITY REPORTING METHOD AND APPARATUS", which is incorporated herein by reference in its entirety.

### TECHNICAL FIELD

This application relates to the field of communications technologies, and in particular, to no-gap measurement.

### BACKGROUND

In new radio (New Radio, NR) in 5th generation mobile communications technologies (the 5th Generation mobile communication technology, 5G), when user equipment (user equipment, UE 201) has a capability of performing simultaneous reception on a frequency band of a serving cell and an inter-frequency band or an inter-RAT frequency band, a network does not need to allocate a gap (gap). In this case, the UE 201 may continue communicating with the serving cell, and simultaneously perform inter-frequency or inter-RAT measurement. This capability is referred to as a no-gap (no gap) capability.

However, in a 5th generation mobile communications system, frequency resources are divided into two frequency ranges (Frequency Range, FR): an FR 1 and an FR 2. The FR 1 is below 6 GHz, and the FR 2 is from 6 GHz to 100 GHz. For example, a frequency resource used for an LTE system is in the FR 1, and a frequency resource used for a 5G system may be in the FR 1 or the FR 2.

Currently, no-gap measurement capability reporting has been fully supported in NR, and NR cannot benefit from a no-gap measurement capability in the FR 1 and the FR 2.

### SUMMARY

Embodiments of this application provide a no-gap measurement capability reporting method and an apparatus, to resolve a problem that a terminal device has not fully accepted no-gap measurement capability reporting in NR.

According to a first aspect, this application provides a measurement method. The method includes: A first device receives a first message sent by a second device, where the first message is configuration information and is used by the first device to determine no-gap measurement information or measurement gap type information. The first device sends a second message to the second device based on the first message, where the second message is used to indicate information about no-gap measurement or type information of a measurement gap.

According to the method in this application, a terminal device can report a no-gap measurement capability to a network device based on different measurement objectives. This effectively resolves problems that no-gap measurement capability reporting has been fully supported in NR and that NR cannot benefit from the no-gap measurement capability in an FR 1 and an FR 2, and reduces signaling data used for no-gap measurement capability reporting by the network device.

With reference to the first aspect, in a possible implementation, the first message includes or indicates any one or more of the following: a carrier combination, a dual connectivity combination, an active BWP combination, or a measurement object.

With reference to the first aspect, in a possible implementation, the type information of the measurement gap is expected measurement gap type information determined by the first device based on the configuration information, and the expected measurement gap type information includes any one or more of the following: a gap pattern ID, a measurement gap length, or a measurement gap repetition period.

With reference to the first aspect, in a possible implementation, when a quantity of component carriers CCs or secondary cell groups SCGs corresponding to the first device is increased or decreased, the first device receives the first message sent by the second device.

With reference to the first aspect, in a possible implementation, the first device receives a third message sent by the second device, where the third message is used to indicate the first device to release a measurement gap.

With reference to the first aspect, in a possible implementation, the method further includes: The first device sends a measurement gap release request to the second device, where the second message is further used to indicate that the first device expects to release the measurement gap.

With reference to the first aspect, in a possible implementation, the first message is further used to indicate whether the measurement gap can be dynamically activated or deactivated.

With reference to the first aspect, in a possible implementation, the second message is further used to indicate that the first device requests to activate the measurement gap or to deactivate the measurement gap.

According to a second aspect, this application provides a measurement method. The method includes: A second device sends a first message to a first device, where the first message is configuration information and is used by the first device to determine no-gap measurement information or measurement gap type information. The second device receives a second message, where the second message is used to indicate information about no-gap measurement of the first device or type information of a measurement gap of the first device.

According to the method in this application, a terminal device can report a no-gap measurement capability to a network device based on different measurement objectives. In this way, the terminal device can report the no-gap measurement capability to the network device based on the different measurement objectives. This effectively resolves problems that no-gap measurement capability reporting has been fully supported in NR and that NR cannot benefit from the no-gap measurement capability in an FR 1 and an FR 2, and reduces signaling data used for no-gap measurement capability reporting by the network device.

With reference to the second aspect, in a possible implementation, the first message includes or indicates any one or more of the following: a carrier combination, a dual connectivity combination, an active BWP combination, or a measurement object.

With reference to the second aspect, in a possible implementation, the type information of the measurement gap is expected measurement gap type information determined by the first device based on the configuration information, and the expected measurement gap type information includes any one or more of the following: a gap pattern ID, a measurement gap length, or a measurement gap repetition period.

With reference to the second aspect, in a possible implementation, the second device sends the first message when the second device increases or decreases a quantity of component carriers CCs or secondary cell groups SCGs corresponding to the first device.

With reference to the second aspect, in a possible implementation, the second device sends a third message to the first device, where the third message is used to indicate the first device to release a measurement gap.

With reference to the second aspect, in a possible implementation, the second device receives a measurement gap release request sent by the first device, where the second message is further used to indicate that the first device expects to release the measurement gap.

With reference to the second aspect, in a possible implementation, the first message is further used to indicate whether the measurement gap can be dynamically activated or deactivated.

With reference to the second aspect, in a possible implementation, the second message is further used to indicate that the first device requests to activate the measurement gap or to deactivate the measurement gap.

According to the method in this application, a terminal device can report a no-gap measurement capability to a network device based on different measurement objectives. This resolves a problem that no-gap capability reporting has not been accepted in NR.

According to a third aspect, a first device for measurement is provided, including: a receiver, configured to receive a first message sent by a second device, where the first message is configuration information and is used by the first device to determine no-gap measurement information or measurement gap type information; and a transmitter, configured to send a second message to the second device based on the first message, where the second message is used to indicate information about no-gap measurement or type information of a measurement gap.

According to the method in this application, a terminal device can report a no-gap measurement capability to a network device based on different measurement objectives.

With reference to the third aspect, in a possible implementation, the first message includes or indicates any one or more of the following: a carrier combination, a dual connectivity combination, an active BWP combination, or a measurement object.

With reference to the third aspect, in a possible implementation, the type information of the measurement gap is expected measurement gap type information determined by the first device based on the configuration information, and the expected measurement gap type information includes any one or more of the following: a gap pattern ID, a measurement gap length, or a measurement gap repetition period.

With reference to the third aspect, in a possible implementation, when a quantity of component carriers CCs or secondary cell groups SCGs corresponding to the first device is increased or decreased, the receiver receives the first message sent by the second device.

With reference to the third aspect, in a possible implementation, the receiver receives a third message sent by the second device, where the third message is used to indicate the first device to release a measurement gap.

With reference to the third aspect, in a possible implementation, the transmitter sends a measurement gap release request to the second device, where the second message is further used to indicate that the first device expects to release the measurement gap.

With reference to the third aspect, in a possible implementation, the first message is further used to indicate whether the measurement gap can be dynamically activated or deactivated.

With reference to the third aspect, in a possible implementation, the second message is further used to indicate that the first device requests to activate the measurement gap or to deactivate the measurement gap.

According to the method in this application, a terminal device can report a no-gap measurement capability to a network device based on different measurement objectives. This effectively resolves problems that no-gap measurement capability reporting has been fully supported in NR and that NR cannot benefit from the no-gap measurement capability in an FR 1 and an FR 2, and reduces signaling data used for no-gap measurement capability reporting by the network device.

According to a fourth aspect, a second device for measurement is provided, including: a transmitter, configured to send a first message to a first device, where the first message is configuration information and is used by the first device to determine no-gap measurement information or measurement gap type information; and a receiver, configured to receive a second message, where the second message is used to indicate information about no-gap measurement of the first device or type information of a measurement gap of the first device.

With reference to the fourth aspect, in a possible implementation, the first message includes or indicates any one or more of the following: a carrier combination, a dual connectivity combination, an active BWP combination, or a measurement object.

With reference to the fourth aspect, in a possible implementation, the type information of the measurement gap is expected measurement gap type information determined by the first device based on the configuration information, and the expected measurement gap type information includes any one or more of the following: a gap pattern ID, a measurement gap length, or a measurement gap repetition period.

With reference to the fourth aspect, in a possible implementation, the transmitter sends the first message when the second device increases or decreases a quantity of component carriers CCs or secondary cell groups SCGs corresponding to the first device.

With reference to the fourth aspect, in a possible implementation, the transmitter sends a third message to the first device, where the third message is used to indicate the first device to release a measurement gap.

With reference to the fourth aspect, in a possible implementation, the receiver receives a measurement gap release request sent by the first device, where the second message is further used to indicate that the first device expects to release the measurement gap.

With reference to the fourth aspect, in a possible implementation, the first message is further used to indicate whether the measurement gap can be dynamically activated or deactivated.

With reference to the fourth aspect, in a possible implementation, the second message is further used to indicate that the first device requests to activate the measurement gap or to deactivate the measurement gap.

According to the method in this application, a terminal device can report a no-gap measurement capability to a network device based on different measurement objectives. This effectively resolves problems that no-gap measurement capability reporting has been fully supported in NR and that NR cannot benefit from the no-gap measurement capability in an FR 1 and an FR 2, and reduces signaling data used for no-gap measurement capability reporting by the network device.

According to a fifth aspect, a no-gap measurement capability reporting method used in a gap measurement process is provided, including: A first device receives a first message sent by a second device, where the first message is used to indicate the first device to determine gap measurement. The first device sends a second message to the second device based on the first message, where the second message is used to indicate a no-gap measurement capability.

In the foregoing implementation, a terminal device can report a no-gap measurement capability based on a measurement objective, to resolve a problem that no-gap measurement capability reporting has not been accepted in NR.

With reference to the fifth aspect, in a possible implementation, when a quantity of component carriers CCs or secondary cell groups SCGs corresponding to the first device is increased or decreased, the first device receives the first message sent by the second device, where the first message includes only a measurement objective; and the first device sends the second message to the second device.

With reference to the fifth aspect, in a possible implementation, the first message includes at least one of one or more carrier aggregation CA combinations, dual connectivity DC combinations, and active bandwidth part BWP combinations, and a corresponding measurement objective.

With reference to the fifth aspect, in a possible implementation, the first message further includes gap configuration information, and the first device has the no-gap measurement capability; the first device sends gap release request information to the second device; and the first device receives gap release indication information sent by the second device.

With reference to the fifth aspect, in a possible implementation, the first message further includes gap configuration information, and the first device does not have the no-gap measurement capability; and the first device sends request information for not releasing a gap to the second device.

With reference to the fifth aspect, in a possible implementation, the first message does not include gap configuration information, and the first device does not have the no-gap measurement capability; the first device sends gap request information to the second device; and the first device receives the gap configuration information sent by the second device.

With reference to the fifth aspect, in a possible implementation, the first message does not carry gap configuration information, and the first device has the no-gap measurement capability; and the first device sends the second message to the second device, where the second message is used by the first device to acknowledge, to the second device, that the first device does not require configuration of gap measurement.

With reference to the fifth aspect, in a possible implementation, the first message further includes a message indicating that a gap can be dynamically canceled; and when the first device has the no-gap measurement capability, the first device sends a gap cancellation message to the second device; or when the first device does not have the no-gap measurement capability, the first device sends a gap addition message to the second device.

With reference to the fifth aspect, in a possible implementation, the second message further includes a gap type, and the gap type includes one or more of a gap pattern ID, a measurement gap length, and a measurement gap repetition period.

With reference to the fifth aspect, in a possible implementation, when the measurement objective includes one or more measurement objectives, the first device sends the no-gap measurement capability corresponding to the one or more measurement objectives to the second device.

According to a sixth aspect, a no-gap measurement capability reporting method used in a gap measurement process is provided, including: A second device sends a first message to a first device, where the first message is used to indicate the first device to determine gap measurement. The second device receives a second message sent by the first device based on the first message, where the second message is used to indicate a no-gap measurement capability.

In the foregoing implementation, a terminal device can report a no-gap measurement capability based on a measurement objective, to resolve a problem that no-gap measurement capability reporting has not been accepted in NR.

With reference to the sixth aspect, in a possible implementation, when a quantity of component carriers CCs or secondary cell groups SCGs corresponding to the first device is increased or decreased, the second device sends the first message to the first device, where the first message includes only a measurement objective; and the second device sends the second message to the first device.

With reference to the sixth aspect, in a possible implementation, the first message includes at least one of one or more carrier aggregation CA combinations, dual connectivity DC combinations, and active bandwidth part BWP combinations, and a corresponding measurement objective.

With reference to the sixth aspect, in a possible implementation, the first message further includes gap configuration information, and the first device has the no-gap measurement capability; the second device receives gap release request information sent by the first device; and the second device receives and sends gap release indication information to the first device.

With reference to the sixth aspect, in a possible implementation, the first message further includes gap configuration information, and the first device does not have the no-gap measurement capability; and the second device receives request information, sent by the first device, for not releasing a gap.

With reference to the sixth aspect, in a possible implementation, the first message does not include gap configuration information, and the first device does not have the no-gap measurement capability; the second device receives gap request information sent by the first device; and the second device sends the gap configuration information to the first device.

With reference to the sixth aspect, in a possible implementation, the first message does not carry gap configuration information, and the first device has the no-gap measurement capability; and the second device receives the second message sent by the first device, where the second message is used by the first device to acknowledge, to the second device, that the first device does not require configuration of gap measurement.

With reference to the sixth aspect, in a possible implementation, the first message further includes a message indicating that a gap can be dynamically canceled; and when the first device has the no-gap measurement capability, the second device receives a gap cancellation message sent by the first device; or when the first device does not have the no-gap measurement capability, the second device receives a gap addition message sent by the first device.

With reference to the sixth aspect, in a possible implementation, the second message further includes a gap type, and the gap type includes one or more of a gap pattern ID, a measurement gap length, and a measurement gap repetition period.

With reference to the sixth aspect, in a possible implementation, when the measurement objective includes one or more measurement objectives, the first device sends the no-gap measurement capability corresponding to the one or more measurement objectives to the second device.

According to a seventh aspect, a first device for no-gap measurement capability reporting in a gap measurement process is provided, including: a receiver, configured to receive a first message sent by a second device, where the first message is used by the first device to determine gap measurement; and
a transmitter, configured to send a second message to the second device based on the first message, where the second message is used to indicate a no-gap measurement capability.

In the foregoing implementation, a terminal device can report a no-gap measurement capability based on a measurement objective, to resolve a problem that no-gap measurement capability reporting has not been accepted in NR.

With reference to the seventh aspect, in a possible implementation, when a quantity of component carriers CCs or secondary cell groups SCGs corresponding to the first device is increased or decreased, the receiver receives the first message sent by the second device, where the first message includes only a measurement objective; and the transmitter sends the second message to the second device.

With reference to the seventh aspect, in a possible implementation, the first message includes at least one of one or more carrier aggregation CA combinations, dual connectivity DC combinations, and active bandwidth part BWP combinations, and a corresponding measurement objective.

With reference to the seventh aspect, in a possible implementation, the first message further includes gap configuration information, and the first device has the no-gap measurement capability; the transmitter sends gap release request information to the second device; and the receiver receives gap release indication information sent by the second device.

With reference to the seventh aspect, in a possible implementation, the first message further includes gap configuration information, and the first device does not have the no-gap measurement capability; and the transmitter sends request information for not releasing a gap to the second device.

With reference to the seventh aspect, in a possible implementation, the first message does not include gap configuration information, and the first device does not have the no-gap measurement capability; the transmitter sends gap request information to the second device; and the receiver receives the gap configuration information sent by the second device.

With reference to the seventh aspect, in a possible implementation, the first message does not carry gap configuration information, and the first device has the no-gap measurement capability; and the first device sends the second message to the second device, where the second message is used by the first device to acknowledge, to the second device, that the first device does not require configuration of gap measurement.

With reference to the seventh aspect, in a possible implementation, the first message further includes a message indicating that a gap can be dynamically canceled; and when the first device has the no-gap measurement capability, the transmitter sends a gap cancellation message to the second device; or when the first device does not have the no-gap measurement capability, the transmitter sends a gap addition message to the second device.

With reference to the seventh aspect, in a possible implementation, the second message further includes a gap type, and the gap type includes one or more of a gap pattern ID, a measurement gap length, and a measurement gap repetition period.

With reference to the seventh aspect, in a possible implementation, when the measurement objective includes one or more measurement objectives, the first device sends the no-gap measurement capability corresponding to the one or more measurement objectives to the second device.

According to an eighth aspect, a second device for no-gap measurement capability reporting in a gap measurement process is provided, including: a transmitter, configured to send a first message to a first device, where the first message is used to indicate the first device to determine gap measurement; and a receiver, configured to receive a second message sent by the first device based on the first message, where the second message is used to indicate a no-gap measurement capability.

In the foregoing implementation, a terminal device can report a no-gap measurement capability based on a measurement objective, to resolve a problem that no-gap measurement capability reporting has not been accepted in NR.

With reference to the eighth aspect, in a possible implementation, when a quantity of component carriers CCs or secondary cell groups SCGs corresponding to the first device is increased or decreased, the second device sends the first message to the first device, where the first message includes only a measurement objective; and the transmitter sends the second message to the first device.

With reference to the eighth aspect, in a possible implementation, when a quantity of component carriers CCs or secondary cell groups SCGs corresponding to the first device is increased or decreased, the transmitter sends the first message to the first device, where the first message includes only a measurement objective; and the transmitter sends the second message to the first device.

With reference to the eighth aspect, in a possible implementation, the first message includes at least one of one or more carrier aggregation CA combinations, dual connectivity DC combinations, and active bandwidth part BWP combinations, and a corresponding measurement objective.

With reference to the eighth aspect, in a possible implementation, the first message further includes gap configuration information, and the first device has the no-gap measurement capability; the receiver receives gap release request information sent by the first device; and the transmitter receives and sends gap release indication information to the first device.

With reference to the eighth aspect, in a possible implementation, the first message further includes gap configuration information, and the first device does not have the no-gap measurement capability; and the receiver receives request information, sent by the first device, for not releasing a gap.

With reference to the eighth aspect, in a possible implementation, the first message does not include gap configuration information, and the first device does not have the no-gap measurement capability; the receiver receives gap request information sent by the first device; and the transmitter sends the gap configuration information to the first device.

With reference to the eighth aspect, in a possible implementation, the first message does not carry gap configuration information, and the first device has the no-gap measurement capability; and the receiver receives the second message sent by the first device, where the second message is used by the first device to acknowledge, to the second device, that the first device does not require configuration of gap measurement.

With reference to the eighth aspect, in a possible implementation, the first message further includes a message indicating that a gap can be dynamically canceled; and when the first device has the no-gap measurement capability, the receiver receives a gap cancellation message sent by the first device; or when the first device does not have the no-gap measurement capability, the receiver receives a gap addition message sent by the first device.

With reference to the eighth aspect, in a possible implementation, the second message further includes a gap type, and the gap type includes one or more of a gap pattern ID, a measurement gap length, and a measurement gap repetition period.

With reference to the eighth aspect, in a possible implementation, when the measurement objective includes one or more measurement objectives, the first device sends the no-gap measurement capability corresponding to the one or more measurement objectives to the second device.

According to a ninth aspect, a first device for no-gap measurement capability reporting in a gap measurement process is provided, including: a receiving unit, configured to receive a first message sent by a second device, where the first message is used by the first device to determine gap measurement; and
a sending unit, configured to send a second message to the second device based on the first message, where the second message is used to indicate a no-gap measurement capability.

In the foregoing implementation, a terminal device can report a no-gap measurement capability based on a measurement objective, to resolve a problem that no-gap measurement capability reporting has not been accepted in NR.

With reference to the ninth aspect, in a possible implementation, when a quantity of component carriers CCs or secondary cell groups SCGs corresponding to the first device is increased or decreased, the receiving unit receives the first message sent by the second device, where the first message includes only a measurement objective; and the sending unit sends the second message to the second device.

With reference to the ninth aspect, in a possible implementation, the first message includes at least one of one or more carrier aggregation CA combinations, dual connectivity DC combinations, and active bandwidth part BWP combinations, and a corresponding measurement objective.

With reference to the ninth aspect, in a possible implementation, the first message further includes gap configuration information, and the first device has the no-gap measurement capability; the sending unit sends gap release request information to the second device; and the receiving unit receives gap release indication information sent by the second device.

With reference to the ninth aspect, in a possible implementation, the first message further includes gap configuration information, and the first device does not have the no-gap measurement capability; and the sending unit sends request information for not releasing a gap to the second device.

With reference to the ninth aspect, in a possible implementation, the first message does not include gap configuration information, and the first device does not have the no-gap measurement capability; the sending unit sends gap request information to the second device; and the receiving unit receives the gap configuration information sent by the second device.

With reference to the ninth aspect, in a possible implementation, the first message does not carry gap configuration information, and the first device has the no-gap measurement capability; and the first device sends the second message to the second device, where the second message is used by the first device to acknowledge, to the second device, that the first device does not require configuration of gap measurement.

With reference to the ninth aspect, in a possible implementation, the first message further includes a message indicating that a gap can be dynamically canceled; and when the first device has the no-gap measurement capability, the sending unit sends a gap cancellation message to the second device; or when the first device does not have the no-gap measurement capability, the sending unit sends a gap addition message to the second device.

With reference to the ninth aspect, in a possible implementation, the second message further includes a gap type, and the gap type includes one or more of a gap pattern ID, a measurement gap length, and a measurement gap repetition period.

With reference to the ninth aspect, in a possible implementation, when the measurement objective includes one or more measurement objectives, the first device sends the no-gap measurement capability corresponding to the one or more measurement objectives to the second device.

According to a tenth aspect, a second device for no-gap measurement capability reporting in a gap measurement process is provided, including: a sending unit, configured to send a first message to a first device, where the first message is used to indicate the first device to determine gap measurement; and a receiving unit, configured to receive a second message sent by the first device based on the first message, where the second message is used to indicate a no-gap measurement capability.

In the foregoing implementation, a terminal device can report a no-gap measurement capability based on a measurement objective, to resolve a problem that no-gap measurement capability reporting has not been accepted in NR.

With reference to the tenth aspect, in a possible implementation, when a quantity of component carriers CCs or secondary cell groups SCGs corresponding to the first device is increased or decreased, the second device sends the first message to the first device, where the first message includes only a measurement objective; and the sending unit sends the second message to the first device.

With reference to the tenth aspect, in a possible implementation, when a quantity of component carriers CCs or secondary cell groups SCGs corresponding to the first device is increased or decreased, the sending unit sends the first message to the first device, where the first message includes only a measurement objective; and the sending unit sends the second message to the first device.

With reference to the tenth aspect, in a possible implementation, the first message includes at least one of one or more carrier aggregation CA combinations, dual connectivity DC combinations, and active bandwidth part BWP combinations, and a corresponding measurement objective.

With reference to the tenth aspect, in a possible implementation, the first message further includes gap configuration information, and the first device has the no-gap measurement capability; the receiving unit receives gap release request information sent by the first device; and the sending unit receives and sends gap release indication information to the first device.

With reference to the tenth aspect, in a possible implementation, the first message further includes gap configuration information, and the first device does not have the no-gap measurement capability; and the receiving unit receives request information, sent by the first device, for not releasing a gap.

With reference to the tenth aspect, in a possible implementation, the first message does not include gap configuration information, and the first device does not have the no-gap measurement capability; the receiving unit receives gap request information sent by the first device; and the sending unit sends the gap configuration information to the first device.

With reference to the tenth aspect, in a possible implementation, the first message does not carry gap configuration information, and the first device has the no-gap measurement capability; and the receiving unit receives the second message sent by the first device, where the second message is used by the first device to acknowledge, to the second device, that the first device does not require configuration of gap measurement.

With reference to the tenth aspect, in a possible implementation, the first message further includes a message indicating that a gap can be dynamically canceled; and when the first device has the no-gap measurement capability, the receiving unit receives a gap cancellation message sent by the first device; or when the first device does not have the no-gap measurement capability, the receiving unit receives a gap addition message sent by the first device.

With reference to the tenth aspect, in a possible implementation, the second message further includes a gap type, and the gap type includes one or more of a gap pattern ID, a measurement gap length, and a measurement gap repetition period.

With reference to the tenth aspect, in a possible implementation, when the measurement objective includes one or more measurement objectives, the first device sends the no-gap measurement capability corresponding to the one or more measurement objectives to the second device.

According to an eleventh aspect, a terminal device is provided, including a unit configured to perform the method according to the first aspect or the fifth aspect.

According to a twelfth aspect, a network device is provided, including a unit configured to perform the method in the second aspect or the sixth aspect.

According to a thirteenth aspect, a computer storage medium is provided. The computer storage medium stores program code, and the program code is used to indicate to perform the methods in the first aspect and the second aspect or the methods in the fifth aspect and the sixth aspect.

According to a fourteenth aspect, at least one processor and a communications interface are included. The communications interface is used for information exchange between the communications apparatus and another communications apparatus. When program instructions are executed by the at least one processor, the communications device is enabled to implement a function of a terminal device or a network device in the methods in the first aspect and the second aspect or in the methods in the fifth aspect and the sixth aspect.

The embodiments of this application provide a no-gap measurement capability reporting method and an apparatus. A terminal device is enabled to have a no-gap measurement capability corresponding to a measurement objective. This avoids a problem that there is a large amount of no-gap measurement capability reporting information because a network device delivers an excessive quantity of no-gap measurement capabilities to the terminal device, and resolves a problem that no-gap measurement capability reporting has not been fully accepted currently in NR.

### BRIEF DESCRIPTION OF DRAWINGS

FIG. 1(a) is a schematic diagram of a system used in an embodiment of this application;
FIG. 1(b) is a schematic diagram of a no-gap measurement capability architecture according to an embodiment of this application;
FIG. 2(a) is a schematic diagram of a no-gap measurement capability reporting method according to an embodiment of this application;
FIG. 2(b) is a schematic diagram of another no-gap measurement capability reporting method according to an embodiment of this application;
FIG. 3(a) is a schematic diagram of a no-gap reporting method when a scenario changes according to an embodiment of this application;
FIG. 3(b) is a schematic diagram of another no-gap measurement capability reporting method when a scenario changes according to an embodiment of this application;
FIG. 4(a) is a schematic diagram of a no-gap measurement capability reporting method when a network device allocates a gap according to an embodiment of this application;
FIG. 4(b) is a schematic diagram of another no-gap measurement capability reporting method when a network device allocates a gap according to an embodiment of this application;
FIG. 5(a) is a schematic diagram of a no-gap measurement capability reporting method with an assistance message according to an embodiment of this application;
FIG. 5(b) is a schematic diagram of another no-gap measurement capability reporting method with an assistance message according to an embodiment of this application;
FIG. 6(a) is a schematic diagram of a no-gap measurement capability reporting method when a network device does not allocate a gap according to an embodiment of this application;
FIG. 6(b) is a schematic diagram of another no-gap measurement capability reporting method when a network device does not allocate a gap according to an embodiment of this application;
FIG. 7(a) is a schematic diagram of a no-gap measurement capability reporting method with an assistance message according to an embodiment of this application;
FIG. 7(b) is a schematic diagram of another no-gap measurement capability reporting method with an assistance message according to an embodiment of this application;
FIG. 8(a) is a schematic diagram of a no-gap measurement capability reporting method when a network device has a learning capability according to an embodiment of this application;
FIG. 8(b) is a schematic diagram of another no-gap measurement capability reporting method when there is a learning capability according to an embodiment of this application;
FIG. 9 is a schematic diagram of another no-gap measurement capability determining method according to an embodiment of this application;
FIG. 10 is a schematic diagram of another method for dynamically adjusting a no-gap measurement capability according to an embodiment of this application;
FIG. 11 is a schematic diagram of a terminal device according to an embodiment of this application;
FIG. 12 is a schematic diagram of another terminal device according to an embodiment of this application;
FIG. 13 is a schematic diagram of a network device according to an embodiment of this application;
FIG. 14 is a schematic diagram of another network device according to an embodiment of this application; and
FIG. 15 is a schematic diagram of a communications device according to an embodiment of this application.

### DESCRIPTION OF EMBODIMENTS

The following describes the technical solutions in this application with reference to the accompanying drawings.

The technical solutions in the embodiments of this application may be used in various communications systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS) system, a worldwide interoperability for microwave access (worldwide interoperability for microwave access, WiMAX) communications system, and a future 5th generation (5th generation, 5G) system or new radio (new radio, NR) system.

A network device in the embodiments of this application may be a device configured to communicate with a terminal device. The network device may be a base transceiver station (base transceiver station, BTS) in a global system for mobile communications (global system for mobile communications, GSM) or a code division multiple access (code division multiple access, CDMA) system, may be a NodeB (NodeB, NB) in a wideband code division multiple access (wideband code division multiple access, WCDMA) system, may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a future 5G network, a network device in a future evolved PLMN, or the like. This is not limited in the embodiments of this application.

In NR, more connection modes are supported, including a carrier aggregation (Carrier Aggregation, CA) combination, a BWP combination, and a dual connectivity (MCG (Master Cell Group) + SCG (Secondary Cell Group)) combination; and there are more measurement objectives. An MCG and an SCG may each include a carrier aggregation combination or a BWP combination. A measurement objective may be an inter-frequency band, or an inter-RAT frequency band, another BWP, signals in different beam directions (spatial directions), or signals with different SCSs (subcarrier spacing). In this case, if UE 201 needs to report a no-gap measurement capability, there is a quite large amount of uplink data.

A terminal device in the embodiments of this application may be user equipment (user equipment, UE 201), an access terminal, a subscriber unit, a subscriber station, a mobile station, a mobile console, a remote station, a remote terminal, a mobile device, a user terminal, a terminal, a wireless communications device, a user agent, a user apparatus, or the like. Alternatively, a terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal device in a future 5G network, or the like. This is not limited in the embodiments of this application.

In the embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), such as a Linux operating system, a Unix operating system, an Android operating system, an iOS operating system, or a Windows operating system. The application layer includes applications such as a browser, a contact list, word processing software, and instant messaging software. In addition, a specific structure of an execution body for performing a method provided in the embodiments of this application is not specifically limited in the embodiments of this application, provided that a program that records code for the method provided in the embodiments of this application can be run to perform communication according to the method provided in the embodiments of this application. For example, the execution body of the method provided in the embodiments of this application may be the terminal device, the network device, or a functional module that is in the terminal device or the network device and that can invoke and execute the program.

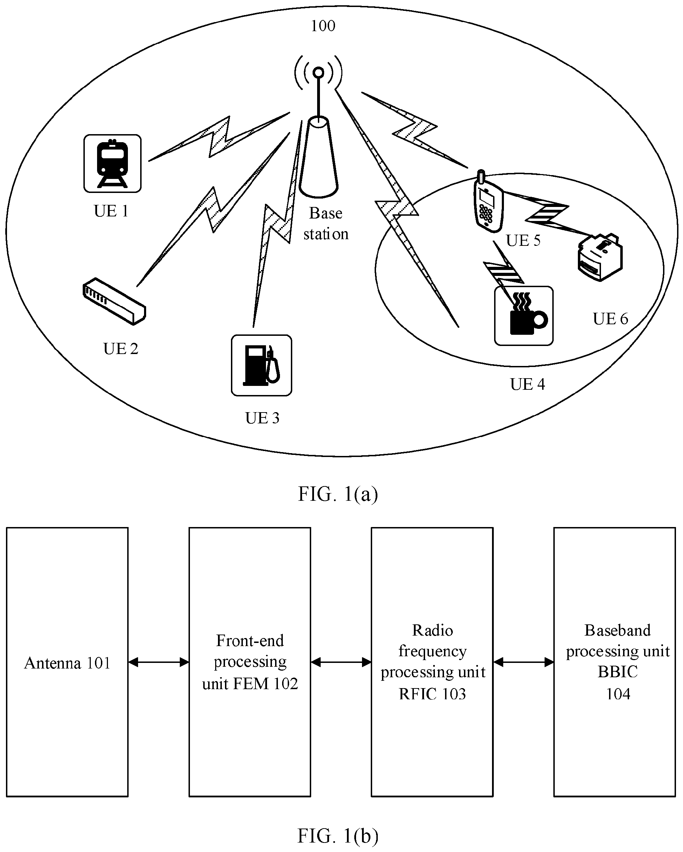

FIG. 1(a) is a schematic diagram of a system used in an embodiment of this application. As shown in FIG. 1(a), a communications system 100 may include a network device and a terminal device. The network device and the terminal may be connected in a wireless manner. It should be understood that the communications system in FIG. 1 includes an entity that can send transmission direction indication information and an entity that can receive the transmission direction indication information. There may be a plurality of communications systems that meet the foregoing condition. For example, the communications system may be a 5G NR system, or may be another communications system. The transmission direction indication information may be, for example, information that is sent by the network device to the terminal device to indicate the terminal device to perform cell handover or cell reselection.

It should be understood that FIG. 1(a) is described by using only an example in which the network device in the communications system is a base station (base station, BS). However, this is not limited in this embodiment of the present invention. For example, the system may further include more other network devices or terminal devices. Similarly, the system may also include more different types of networks or network cells. It should be further understood that the system may also be referred to as a network. This is not limited in this embodiment of the present invention.

For example, in FIG. 1(a), the base station and UE 2011 to UE 2016 form a communications system. In this communications system, the UE 2011 to the UE 2016 may send uplink data to the base station, and the base station may also send downlink information to the UE 2011 to the UE 2016. In addition, the UE 2014 to the UE 2016 may also form a communications system. In this communications system, the UE 2015 may send downlink information to the UE 2014 or the UE 2016. A network type of a network provided by the base station may be different from a network type of a network provided by the UE 2015. For example, the network provided by the base station may be a public network (public network, PN), while the network provided by the UE 2015 may be a non-public network (non-public network, NPN).

The following describes, with reference to FIG. 1(b), a case in which a terminal device has a no-gap measurement capability in this application. As shown in FIG. 1(b), the terminal device has four parts: an antenna 101, a front-end processing unit 102 (Front End Module, FEM), a radio frequency processing unit 103 (Radio-Frequency Integrated Circuits, RFIC), and a baseband processing unit 104 (Baseband Integrated Circuits, BBIC). The RFIC represents a channel capability, and Rx X (Rx 1, Rx 2, ..., and Rx N) represents a receive channel in a band (band). If four antennas are used for reception, four channels need to be occupied. In an LTE connected state, there may be different CA combinations, or simultaneous reception through four antennas and receive channels may be performed in some bands. In this case, a plurality of channels are occupied. The FEM represents a front-end capability, includes a component such as a power amplifier, and usually has a simultaneous reception capability in high and low frequency bands. The BBIC is a digital processing unit and has capabilities such as a capability of demodulating a plurality of component carriers (component carrier, cc) and a capability of performing inter-frequency or inter-RAT measurement.

A combination of an FEM, an RFIC, and a BBIC determines a CA capability of UE 201 and determines whether the UE 201 has a no-gap inter-frequency or inter-RAT measurement capability. For brief description, in this application, it is assumed that the front-end FEM of the UE 201 supports simultaneous reception in some bands, the RFIC supports six channels, and the BBIC may allow that transmission and reception in a serving cell and inter-frequency measurement are performed simultaneously. It is assumed that an inter-RAT frequency band and a frequency band of the serving cell also support a CA combination, and the BBIC also allows that transmission and reception in the serving cell and inter-RAT measurement are performed simultaneously.

For simplicity, Table 1-1 shows only inter-frequency measurement in LTE.

In addition, the following CA combinations are supported (where 1A represents a band 1, a bandwidth of 20 MHz, and 2 Rx antennas; and [1A] represents a band 1, a bandwidth of 20 MHz, and 4 Rx antennas).

It is assumed that the following CA combinations are supported: CA_1A+3A, CA_1A+7A, CA_3A+1A, CA_3A+3A, CA_3A+7A, CA_7A+1A, CA 7A+3A, CA_[1A]-3A, and CA_1A+3A+7A. It is assumed that an inter-frequency measurement capability of the UE 201 fully depends on a CA capability. The inter-frequency measurement capability is reported as follows, where T represents that gap measurement is required, and F represents that gap measurement is not required.

**Table 1-1**

| InterFreq Needforgaps | Band 1 | Band 3 | Band 7 |
|---|---|---|---|
| 1A | T | F | F |
| 3A | F | F | F |
| [1A] | T | F | T |
| 7A | F | F | T |
| 1A+3A | T | T | F |
| 1A+7A | T | F | T |
| 3A+1A | T | T | F |
| 3A+3A | T | T | T |
| 3A+7A | F | T | T |
| 7A+1A | T | F | T |
| 7A+3A | F | T | T |
| [1A]-3A | T | T | T |
| 1A+7A+3A | T | T | T |

In NR, a system is designed more flexibly. When another cell or a bandwidth part (bandwidth part, BWP) is measured, a gap may be required in the following additional scenario: BWPs on different frequency bands in a same component carrier need to support both NR-NR dual connectivity (New Radio New Radio - Dual Connectivity, NN-DC) and NR-LTE Dual Connectivity (New Radio E-UTRAN - Dual Connectivity, NE-DC). In general, in standalone (SA) networking, there are more measurement types that are more complex.

Currently, NR supports a plurality of measurement slots that are shown in Table 1-2.

**Table 1-2**

| Gap pattern ID | Measurement gap length (MGL, ms) | Measurement gap repetition period (MGRP, ms) |
|---|---|---|
| 0 | 6 | 40 |
| 1 | 6 | 80 |
| 2 | 3 | 40 |
| 3 | 3 | 80 |
| 4 | 6 | 20 |
| 5 | 6 | 160 |
| 6 | 4 | 20 |
| 7 | 4 | 40 |
| 8 | 4 | 80 |
| 9 | 4 | 160 |
| 10 | 3 | 20 |
| 11 | 3 | 160 |
| 12 | 5.5 | 20 |
| 13 | 5.5 | 40 |
| 14 | 5.5 | 80 |
| 15 | 5.5 | 160 |
| 16 | 3.5 | 20 |
| 17 | 3.5 | 40 |
| 18 | 3.5 | 80 |
| 19 | 3.5 | 160 |
| 20 | 1.5 | 20 |
| 21 | 1.5 | 40 |
| 22 | 1.5 | 80 |
| 23 | 1.5 | 160 |

As shown in Table 1-2, the gap pattern ID represents a gap pattern ID, the measurement gap length represents a gap length, and the measurement gap repetition period represents a measurement period.

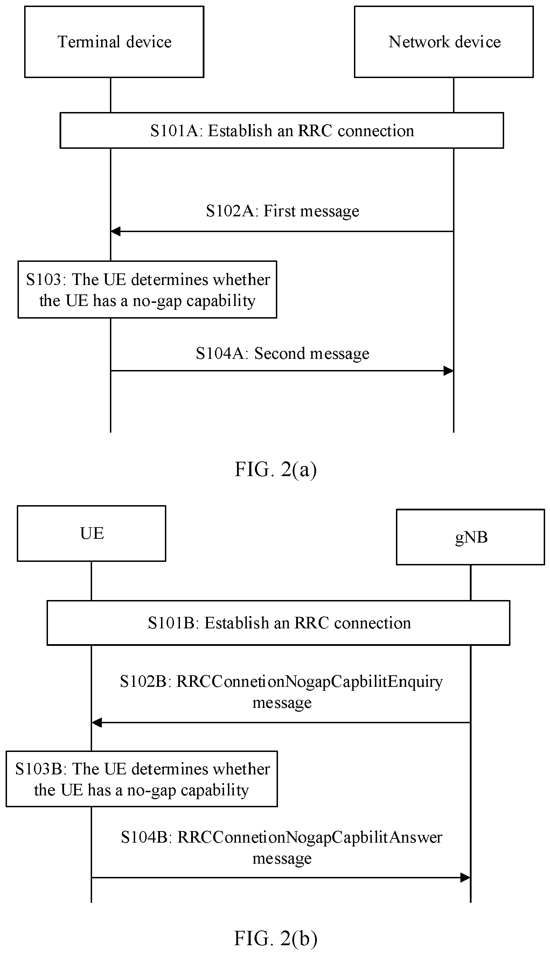

FIG. 2(a) shows an embodiment of no-gap measurement capability reporting according to this application. No-gap measurement capability reporting may be configured in a radio resource control (Radio Resource Control, RRC) reconfiguration message. In this embodiment of this application, a first device may be a terminal device, and a second device may be a network device. A no-gap measurement capability may also be no-gap measurement information. This is not limited in this application. A specific process of this embodiment is as follows:
S101A: The terminal device establishes an RRC connection to the network device.

Specifically, this embodiment may also be implemented when the terminal device is in a cell handover state or a re-establishment state. This is not limited in this application.

S102A: The network device sends a first message to the network device.

Specifically, the first message is used to indicate the terminal device to determine gap measurement. The first message may be used by the terminal device to determine no-gap measurement information or a measurement gap type.

Further, the first message includes all possible CA combinations, DC combinations, and BWP combinations of the network device, and corresponding measurement objectives. The network device sends the first message, and the terminal device queries the corresponding no-gap measurement capability based on a measurement objective in the first message. If the first message includes only a measurement objective, the terminal device requests or does not request, based on the measurement objective, the network device to configure a gap. The measurement objective may be an inter-frequency band, an inter-RAT frequency band, another BWP, signals in different beam directions, or signals with different SCSs (subcarrier spacing).

S103A: The terminal device determines whether the terminal device has the no-gap measurement capability.

Specifically, for the measurement objectives included in the first message sent by the network device, the terminal device separately determines, based on a sequence of the measurement objectives, whether the terminal device has the no-gap measurement capability.

For example, the measurement objectives included in the first message are A, B, and C corresponding to a CA combination, and D and E corresponding to a BWP combination in sequence. In this case, the terminal device separately queries, based on the sequence of A, B, and C corresponding to the CA combination and D and E corresponding to the BWP combination, whether the terminal device has the no-gap measurement capability.

S104A: The terminal device sends a second message to the network device, where the second message is used to indicate the no-gap measurement capability.

Further, the second message indicates information about no-gap measurement or a type of a measurement gap.

Specifically, after separately determining, based on the measurement objectives, whether the terminal device has the no-gap measurement capability, the terminal device uses the second message to carry a corresponding result, and sends the second message to the network device. The second message includes at least one of whether gap measurement is required for a current measurement objective, and a gap type when the gap measurement is required.

For example, when the UE finds that for the measurement objective A, the terminal device does not have the no-gap measurement capability, the terminal device requires configuration of gap measurement. In this case, the second message includes whether gap measurement is required. Further, the second message may include a gap type, and the gap type is one or more of a gap pattern ID, a gap length, and a measurement gap repetition period. For example, the second message includes a type of the gap required for the measurement objective A corresponding to the CA combination. For example, the gap pattern ID is 1, the gap length is 6 milliseconds (ms), and the measurement period is 40 ms.

FIG. 2(b) shows an embodiment of a no-gap measurement capability reporting method configured in an RRC reconfiguration message according to this application. A terminal device may be user equipment (UE), and a network device may be a base station (namely, a gNB). A no-gap measurement capability query process may be complete in an RRC reconfiguration process. Details are as follows:

S101B: Perform an RRC establishment process.

Specifically, no-gap measurement capability reporting may be configured in the RRC reconfiguration message. When the UE performs cell handover or reestablishment, the gNB sends an updated measurement objective to the UE. The UE queries whether the UE has a no-gap measurement capability for the updated measurement objective.

In step S102B, a first message may be an RRCConnetionNogapCapbilitEnquiry message, and includes measurement objectives corresponding to various CA combinations or dual connectivity (Dual Connectivity, DC) combinations.

In step S103B, when receiving the RRCConnetionNogapCapbilitEnquiry message, the UE 201 separately determines, based on a sequence of the measurement objectives carried in the message, whether gap measurement is required.

Specifically, it is assumed that the UE 201 supports CA combinations CA_1A+3A and CA_1A+7A. When the UE 201 receives the RRCConnetionNogapCapbilitEnquiry message or a RRCConnetionSteup message, the UE 201 determines, according to Table 1-1, that the UE 201 requires gap measurement in the band 1 and the band 3 corresponding to the combination CA_1A+3A, and that the UE 201 does not require gap measurement in the band 7 corresponding to the combination CA_1A+3A. For the combination CA_1A+7A, the UE has the no-gap measurement capability in the band 1 and the band 7. For the combination CA_1A+7A, the UE does not have the no-gap measurement capability in the band 3.

In step S104B, a second message may be an RRCConnetionNogapCapbilitAnswer message. In this case, it is still assumed that the UE supports CA combinations CA_1A+3A and CA_1A+7A. The RRCConnetionNogapCapbilitAnswer message sequentially includes whether a measurement gap is required for measurement objectives, the band 1, the band 3, and the band 7, corresponding to the combination CA_1A+3A and for measurement objectives, the band 1, the band 3, and the band 7, corresponding to the combination CA_1A+7A. Further, when a measurement gap is required for the band 1 and the band 3 corresponding to the combination CA_1A+3A and for the band 1 and the band 7 corresponding to the combination CA_1A+7A, the second message may further include a type of a gap required for a corresponding target.

This specification uses the CA combination as an example. Alternatively, a combination of BWP1+BWP2 or a DC combination of NR+LTE or NR+NR may also be used as an example.

In the foregoing implementation, when the UE 201 enters a connected state, the base station may query the UE 201 for the no-gap measurement capability based on all possible CA combinations or DC combinations and corresponding measurement objectives. The UE 201 queries the corresponding no-gap measurement capability based on a sequence of the measurement objectives, and feeds back whether gap measurement is required. Gap configuration information is further included when the gap measurement is required.

A feature of the foregoing embodiment is that the UE 201 does not need to report all no-gap measurement capabilities, but queries the no-gap measurement capability of the UE 201 based on a requirement of the base station, a CA combination capability of the base station, and a neighboring cell deployment status. In this method, the corresponding no-gap measurement capability is sent based on a requirement of the base station, and therefore invalid no-gap measurement capability uploading is avoided.

Different base stations have different deployment statuses. Therefore, when the UE 201 is handed over to a cell or accesses a new cell, the base station queries the no-gap measurement capability of the UE 201 based on a status of the base station.

The foregoing manner can effectively resolve a problem that no-gap capability reporting has not been accepted in NR, and can adapt to a scenario in which a master/secondary cell group CA combination or a secondary cell group supported by the terminal device changes.

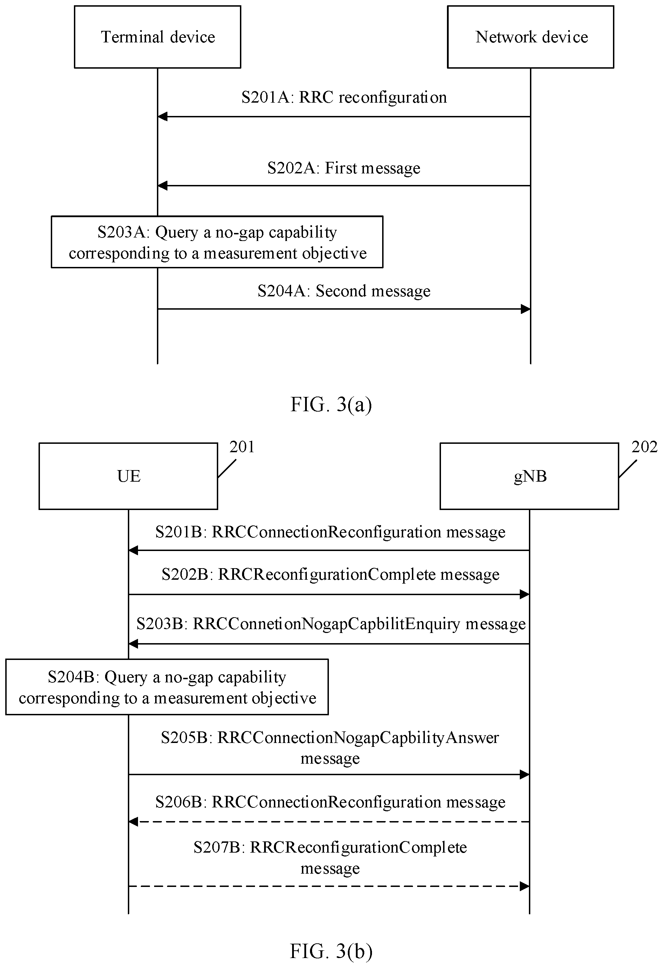

FIG. 3(a) shows another embodiment of this application. When a quantity of component carriers CCs or secondary cell groups (Secondary Cell Group, SCG) corresponding to a terminal device is increased or decreased, a network device sends a first message to the terminal device for querying a no-gap measurement capability corresponding to a measurement objective. In this case, the measurement objective sent by the network device may be a CA combination or a BWP combination, and a corresponding measurement objective. The terminal device queries whether the terminal device has the no-gap measurement capability corresponding to the measurement objective sent by the network device. In this embodiment, an RRC reconfiguration environment is used as an example, and specific steps are as follows:

S201A: RRC reconfiguration is performed between the terminal device and the network device. Specific signaling interaction is shown in steps S201B and S202B in FIG. 3(b). Details are not described in this application.

Specifically, with reference to FIG. 3(b), it can be learned that, in step S201B, the network device, namely, a gNB 202, sends an RRCConnectionReconfiguration message to the terminal device, namely, UE 201, to indicate an increase or a decrease in a quantity of CCs or SCGs to the UE 201. For example, when component carriers corresponding to the UE 201 change from A, B, and C to A and B, the gNB 202 sends, to the UE 201, an RRC reconfiguration message, namely, the RRCConnectionReconfiguration message, to indicate, to the terminal device, that the CCs have changed to A and B.

S202A: The network device sends the first message to the terminal device. In this case, a CA combination supported by the terminal device is changed from CA_A+B+C to CA_A+B. The terminal device queries the network device whether the terminal device has the no-gap measurement capability corresponding to a measurement objective corresponding to the CA combination CA_A+B.

Specifically, as shown in step S203B in FIG. 3(b), the gNB 202 sends an RRCConnetionNogapCapbilitEnquiry message to the UE 201, where the message includes a measurement objective delivered by the gNB 202 to the UE 201, and the RRCConnetionNogapCapbilitEnquiry message is the first message. Specifically, when the CCs change to A and B, the RRCConnetionNogapCapbilitEnquiry message includes A, B, and corresponding measurement objectives.

S203A: The terminal device queries, based on the measurement objective, whether the terminal device has the no-gap measurement capability.

For example, for a measurement objective corresponding to A, the UE has the no-gap measurement capability, and for a measurement objective corresponding to B, the UE does not have the no-gap measurement capability.

S204A: The terminal device sends a second message to the network device, where the second message is used to indicate whether the terminal device has the no-gap measurement capability.

Specifically, as shown in step S205B in FIG. 3(b), the second message may be an RRCConnectionNogapCapbilityAnswer message. After determining whether the UE 201 has the no-gap measurement capability, the UE 201 feeds back the RRCConnectionNogapCapbilityAnswer message to the gNB 202 in a bitmap feedback manner, where the message includes whether the UE 201 needs to perform gap measurement. Specifically, the bitmap feedback manner is as follows: When the UE has the no-gap measurement capability, the UE feeds back a character "1" to the gNB; or when the UE does not have the no-gap measurement capability, the UE feeds back a character "0" to the gNB.

Further, based on the foregoing embodiment, with reference to steps S206 and S207 in FIG. 3(b), it can be learned that after receiving the RRCConnectionNogapCapbilityAnswer message, the gNB 202 sends a RRCConnectionReconfiguration message to the UE 201 based on feedback of the UE 201, to indicate the UE 201 to perform gap measurement based on gap configuration information.

For example, for the measurement objective corresponding to A, the UE 201 has the no-gap measurement capability. In this case, the UE does not need to perform gap measurement, but directly performs no-gap measurement. For the measurement objective corresponding to B, the UE does not have the no-gap measurement capability. In this case, configuration of a gap is required, and gap measurement needs to be performed; and the RRCConnectionNogapCapbility Answer message needs to include a gap type. For descriptions of the gap type, refer to the descriptions in the foregoing embodiment. Details are not described herein again.

After receiving the RRCConnectionReconfiguration message sent by the gNB, the UE 201 sends an RRCReconfigurationComplete message to the UE 201, to indicate that RRC reconfiguration is complete.

According to the foregoing embodiment in this application, the UE 201 needs to configure only measurement gap information based on a current CA combination and a measurement objective delivered by the base station. This reduces signaling interaction in an RRC reconfiguration process.

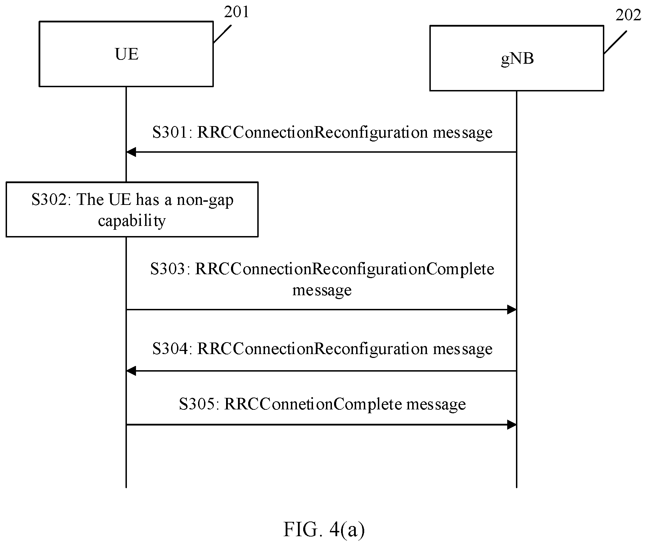

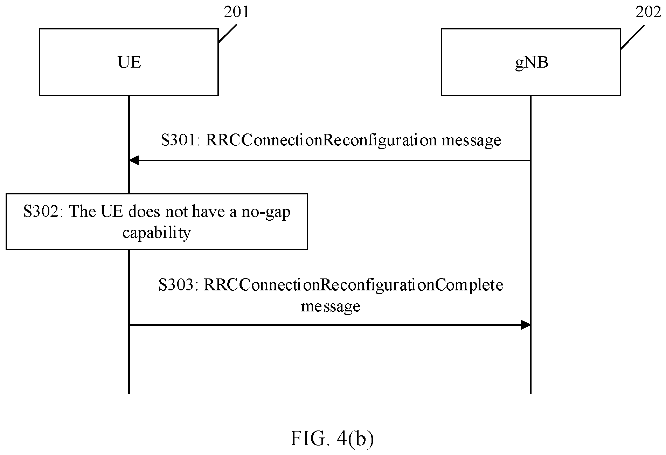

Based on the foregoing embodiment, FIG. 4(a) and FIG. 4(b) shown an embodiment of this application. When a terminal device is in a connected state, and a base station needs to configure a measurement objective, the base station may configure the measurement objective and gap configuration information in an RRC reconfiguration message. The gap configuration information is used to configure gap measurement for the terminal device based on the measurement objective.

After the terminal device receives the RRC reconfiguration message, the terminal device determines, based on the delivered measurement objective, whether the terminal device has a no-gap measurement capability, and sends a feedback message to the base station. After receiving the feedback message from the terminal device, the base station reconfigures gap measurement.

Specifically, as shown in FIG. 4(a), a gNB 202 sends an RRCConnectionReconfiguration message, namely, the RRC reconfiguration message, to UE 201, where the message includes a measurement objective and gap configuration information.

The UE 201 queries, based on the received measurement objective, whether the UE 201 has the no-gap measurement capability.

As shown in FIG. 4(a), if the UE 201 determines, based on the measurement objective, that the UE 201 has the no-gap measurement capability, the UE 201 sends an RRCConnectionReconfigurationComplete message to the gNB 202, where the message includes a gap release request message to the gNB 202. After receiving the gap release request message, the gNB 202 sends an RRCConnectionReconfiguration message to the UE 201, where the message includes information indicating the UE 201 to release configured gap measurement. Further, the UE 201 releases the gap measurement, and the UE 201D performs no-gap measurement on the measurement objective.

In this embodiment, for example, a CA combination is CA_1A+3A. It can be learned from Table 1-1 that, when measurement objectives are the band 1 and the band 3, the UE has the no-gap measurement capability. In this case, the UE directly requests the gNB 202 to release gap measurement configured for the band 1 and the band 3 corresponding to CA_1A+3A. After receiving a measurement gap release indication message from the gNB, the UE performs no-gap measurement on the band 1 and the band 3 corresponding to CA_1A+3A.

As shown in FIG. 4(b), if the UE 201 does not have the no-gap measurement capability, the UE 201 sends an RRCConnectionReconfigurationComplete message to the gNB 202, where the message includes a message, to the gNB 202, for requesting not to release a gap. In this case, the gNB 202 does not perform any processing.

That a CA combination is CA_1A+3A is still used as an example. It can be learned from Table 1-1 that, when a measurement objective is the band 7, the UE does not have the no-gap measurement capability. In this case, the UE directly requests the gNB 202 not to release a gap, and the gNB does not perform any processing. The UE 201 performs gap measurement based on the configured gap configuration information.

Further, the RRCConnectionReconfigurationComplete message mentioned in this application may also be an RRCReconfigurationComplete message. This is not limited in this application.

Further, in this application, the gNB 202 sends an indication message for indicating the UE 201 to release configured gap measurement. In this application, the indication message may be a third message different from the second message. This is not limited in this application.

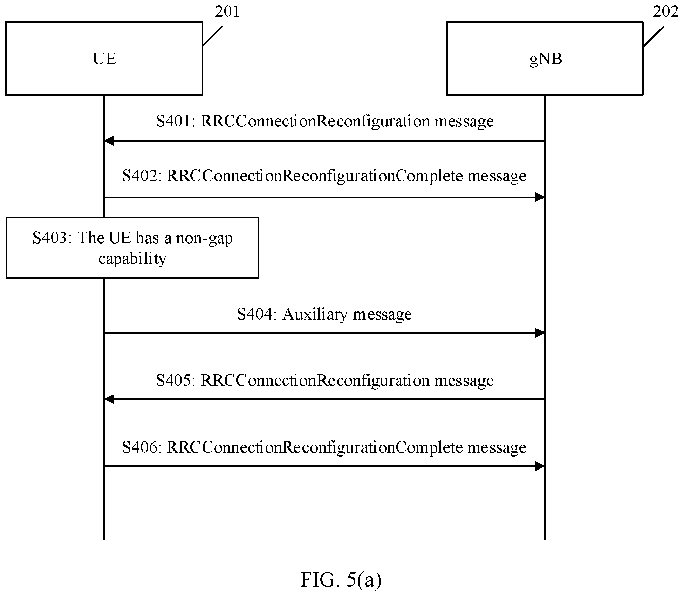

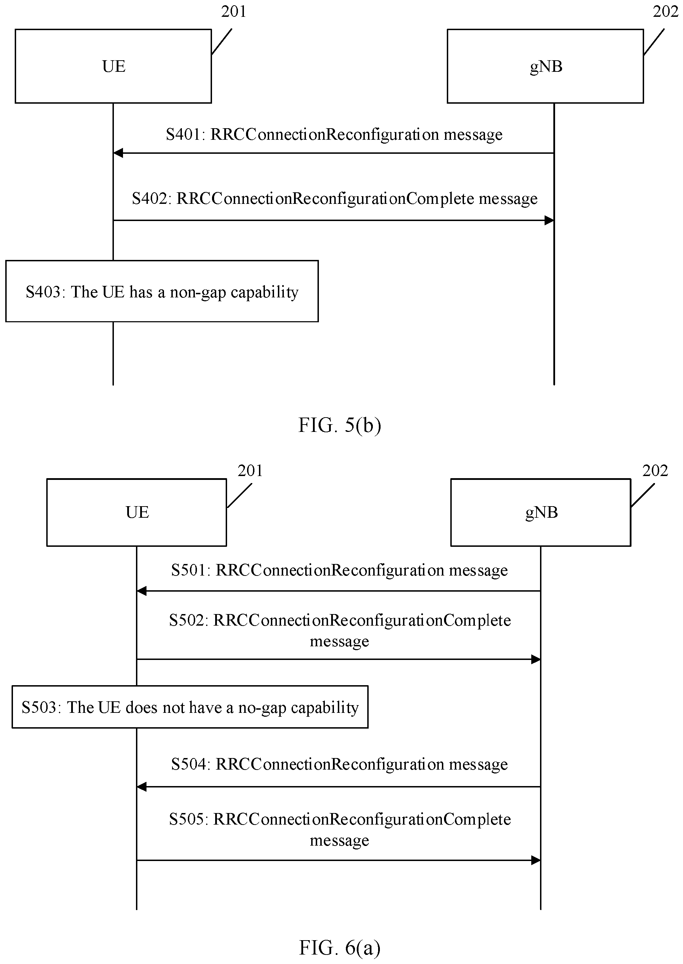

FIG. 5(a) and FIG. 5(b) each show another implementation in this application based on the foregoing embodiment. Based on FIG. 4(a), after the UE 201 receives the RRCConnectionReconfiguration message that includes the measurement objective and a measurement gap configuration message, the UE 201 sends the RRCReconfigurationComplete message to the gNB 202, to indicate that RRC reconfiguration is complete. In this case, if the UE 201 determines, based on the measurement objective, that the UE 201 has the no-gap measurement capability, the UE 201 sends an assistance message to the gNB 202, to request the gNB 202 to release a gap. Then, the gNB 202 sends an RRCConnectionReconfiguration message to the UE 201, to indicate the UE 201 to release the gap, and the UE 201 may perform no-gap measurement. If the UE 201 does not have the no-gap measurement capability, the UE 201 does not perform any processing, and the gNB 202 operates normally.

Compared with the foregoing embodiment, a message for requesting to release or not to release a gap and the RRC reconfiguration message are separately sent to the network device. This reduces load of signaling used for carrying the RRC reconfiguration message, and improves signaling accuracy.

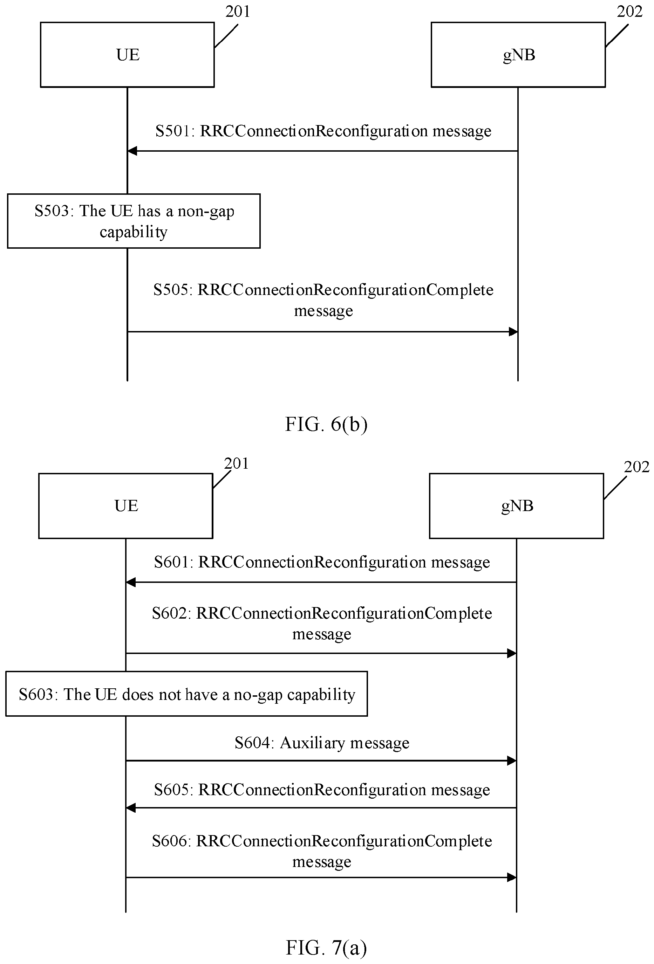

FIG. 6 shows an implementation, provided in this application, in which a terminal device queries a no-gap measurement capability when a network device does not allocate a gap to the terminal device, that is, when an RRC reconfiguration message does not include a gap configuration message.

Specifically, as shown in FIG. 6, a gNB 202 sends an RRCConnectionReconfiguration message to UE 201, where the message does not include gap configuration information. In this case, if the UE 201 does not have a no-gap measurement capability, as shown in FIG. 6(a), the UE 201 sends an RRCConnectionReconfigurationComplete message to the gNB 202, where the message includes a message for requesting the gNB 202 to configure a gap. After the gNB 202 receives the message sent by the UE 201 for requesting the gNB 202 to configure a gap, the gNB 202 sends an RCConnectionReconfigurationComplete message to the UE 201, to configure the gap for the UE 201.

Specifically, in this embodiment, that a CA combination is CA_1A+3A is used as an example. It can be learned from Table 1-1 that, when a measurement objective is the band 7, the UE does not have the no-gap measurement capability. In this case, the UE sends the RCConnectionReconfigurationComplete message to the gNB 202, where the message includes the message for requesting the gNB to configure a gap. After receiving the message for requesting the gNB to configure a gap for the band 7 corresponding to CA_1A+3A, the gNB sends the RRCConnectionReconfiguration message to the UE 201, where the message includes gap configuration information. The UE 201 configures a gap for the band 7 corresponding to CA_1A+3A, and performs gap measurement.

If the UE 201 determines that the UE 201 has a no-gap measurement capability, as shown in FIG. 6(b), the UE 201 sends an RCConnectionReconfigurationComplete message to the gNB 202, to directly acknowledge a gap configuration to the gNB 202. After receiving the message, the gNB 202 performs no processing. The UE 201 performs no-gap measurement.

That a CA combination is CA_1A+3A is still used as an example. It can be learned from Table 1-1 that, when measurement objectives are the band 1 and the band 3, the UE has the no-gap measurement capability. In this case, the UE directly includes a gap configuration acknowledgement message in the RCConnectionReconfigurationComplete message, and the gNB 202 no longer configures gap measurement for the UE 201.

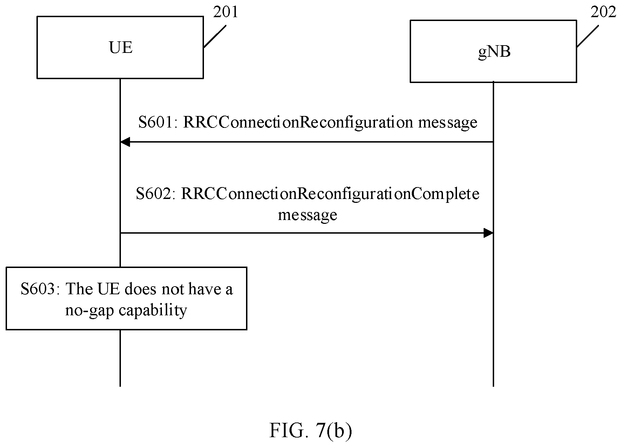

Similar to FIG. 5(a) and FIG. 5(b), based on the foregoing embodiment, as shown in FIG. 7(a) and FIG. 7(b), after receiving an RRCConnectionReconfiguration message, the UE 201 may directly send an RCConnectionReconfigurationComplete message, to acknowledge that RRC reconfiguration is complete. When determining that the UE 201 does not have the no-gap measurement capability, the UE 201 sends an assistance message to the gNB 202, to request the gNB 202 to configure a gap. Otherwise, the UE 201 does not send a message. Because the implementation is similar to those shown in FIG. 5(a) and FIG. 5(b), details are not described herein again.

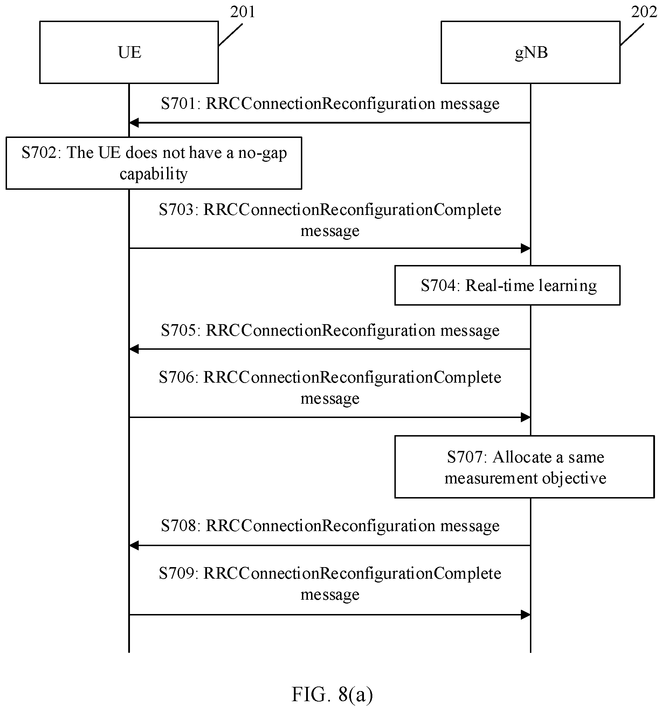

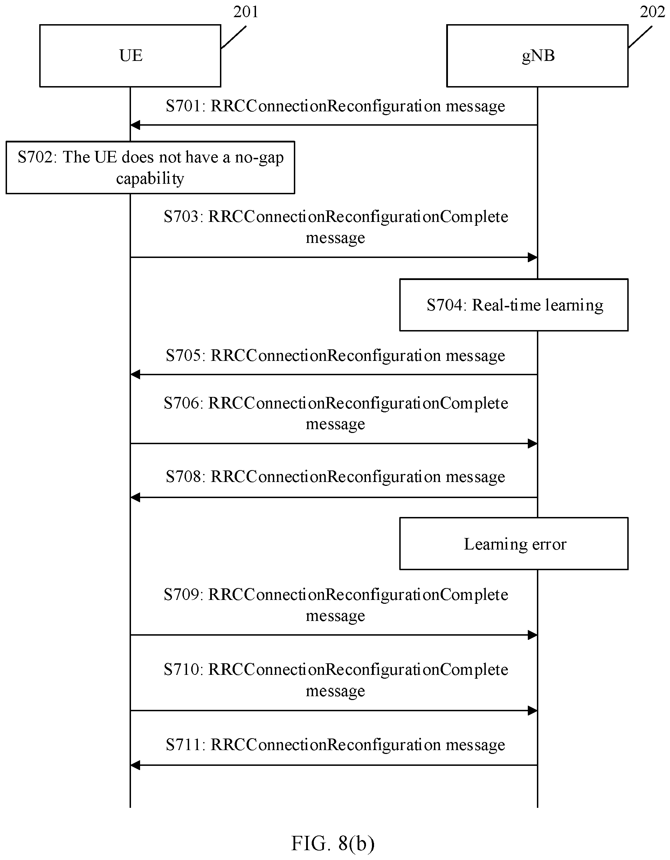

Based on the foregoing embodiment, FIG. 8 shows an embodiment in which a base station has a learning capability according to this application. If the base station has the learning capability, the base station may record and learn whether the UE 201 has a no-gap measurement capability for an inter-frequency or inter-RAT measurement objective, and send a learning result to a core network. In the same case, when the UE 201 has the no-gap measurement capability for the measurement objective, the base station may directly configure the UE 201 to perform no-gap measurement.

With reference to FIG. 4(a), as shown in FIG. 8(a), when determining, based on the measurement objective, that the UE 201 has the no-gap measurement capability, the UE 201 sends an RRCConnectionReconfiguration message to the gNB 202, to indicate the UE 201 to release a gap. After the UE 201 releases the gap, the base station performs learning. When encountering the same measurement objective, the gNB 202 no longer allocates a gap to the UE 201, and the UE 201 directly performs no-gap measurement.

Further, learning performed by the base station may be as follows: When the base station records that the UE 201 performs no-gap measurement for the same measurement objective for a preset quantity of times, the base station reports, to the core network, that the UE 201 performs no-gap measurement for the same measurement objective for the preset quantity of times. The preset quantity of times may be a quantity of times in a period of time. For example, in two hours from 10:00 to 12:00, the UE 201 performs no-gap measurement for the same measurement objective for 10 times. Alternatively, the preset quantity of times may be a total quantity of times. For example, the UE 201 performs no-gap measurement for the same measurement objective for a total of 10 times. This is not limited in this application.

As shown in FIG. 8(b), it is assumed that the UE 201 does not have the no-gap measurement capability for the measurement objective. In other words, a measurement capability of the UE 201 changes. For example, the UE 201 changes from single-card UE to dual-card UE. In this case, if the gNB 202 does not allocate a corresponding gap, the UE 201 further sends an RRCReconfigurationComplete message to the gNB 202, to request the gNB 202 to allocate a gap. A specific process is similar to that in the foregoing embodiment, and details are not described herein again.

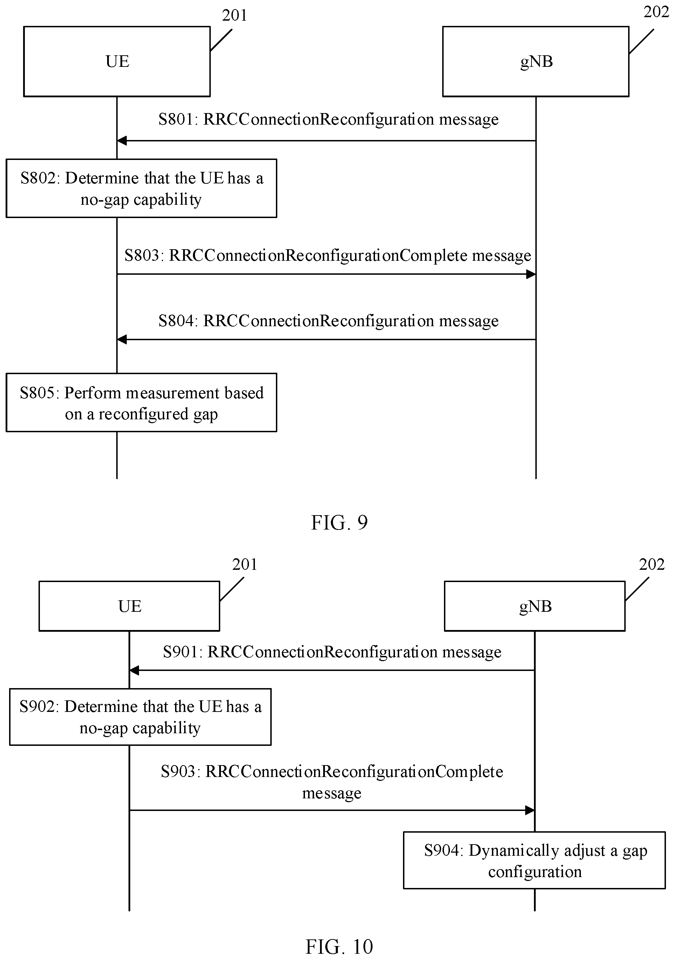

Based on the foregoing embodiment, this application further provides an implementation in which UE 201 queries a no-gap measurement capability based on a measurement objective. Specifically, as shown in FIG. 9, the UE 201 receives one or more measurement objectives sent by a gNB 202. The one or more measurement objectives are specifically a plurality of IDs of gaps that may be required in gap measurement. However, the UE 201 does not have the no-gap measurement capability for all measurement IDs. The UE 201 queries and determines whether the UE 201 has the no-gap measurement capability for a corresponding measurement ID, and the UE 201 reports a query result to the gNB 202. Then, the gNB 202 reconfigures a measurement gap pattern for the UE 201 based on the reported result. In this way, configuration of a gap is more proper.

The foregoing implementation can simplify no-gap capability reporting, and effectively resolve problems that excessive signaling interactions are engaged and workload is excessively heavy.

Further, this application further provides a method for dynamically adjusting a gap configuration through a protocol. Specifically, as shown in FIG. 10, when a network device and a terminal device have a protocol through which a no-gap measurement capability can be dynamically adjusted, a gNB 202 sends an RRCConnectionReconfiguration message to UE 201, where the message includes a message used to indicate whether a gap can be dynamically adjusted. If the gap can be dynamically adjusted, the UE 201 determines, based on a measurement objective, whether the UE 201 has the no-gap measurement capability. When the UE 201 has the no-gap measurement capability, the UE 201 sends an RRCReconfigurationComplete message to the gNB 202, where the message includes a gap cancelation instruction. When the UE 201 does not have the no-gap measurement capability, the UE 201 sends an RRCReconfigurationComplete message to the gNB 202, where the RRCReconfigurationComplete message includes a gap addition instruction.

In the foregoing embodiment, gap configuration information includes a measurement gap repetition period, a gap length, measurement duration, and the like. This is not specifically limited in this application.

In the foregoing embodiment, no-gap capability reporting can be adjusted based on an actual status of the terminal device.

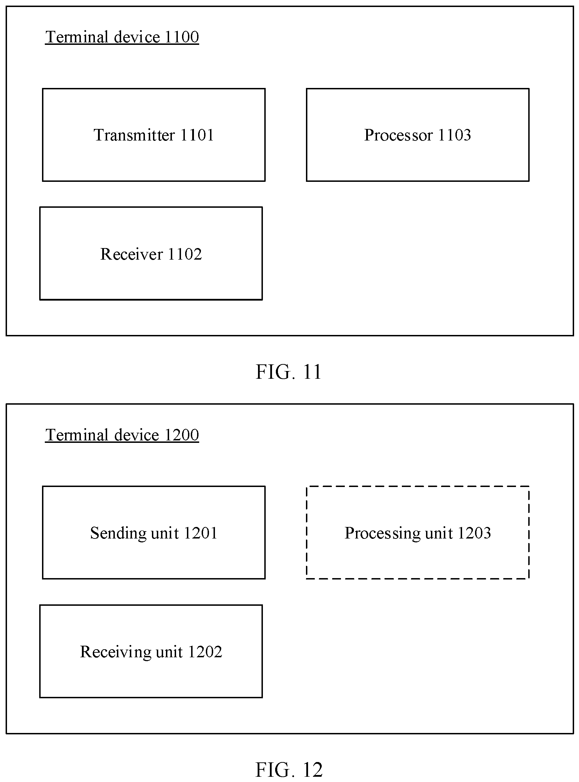

The foregoing describes the no-gap measurement capability reporting methods in the embodiments of this application in detail with reference to FIG. 2(a) to FIG. 10. The following describes apparatus embodiments in the embodiments of this application with reference to FIG. 11 to FIG. 14. It should be understood that descriptions of the method embodiments correspond to descriptions of the apparatus embodiments. Therefore, for a part not described in detail in the apparatus embodiments, refer to the foregoing method embodiments.

FIG. 11 is a schematic structural diagram of a terminal device according to an embodiment of this application. The terminal device 1100 in FIG. 11 may be the first device. The terminal device 1100 may be configured to implement the foregoing steps performed by the first device, the terminal device, or the UE. The terminal device 1100 includes a transmitter 1101 and a receiver 1102.

The transmitter 1101 is configured to send a second message to a network device, where the second message is used to indicate a no-gap measurement capability.

Specifically, after separately determining, based on measurement objectives, whether the terminal device has the no-gap measurement capability, the terminal device uses the second message to carry a corresponding result, and sends the second message to the network device. The second message includes two parts of content: whether gap measurement is required for a current measurement objective, and a gap type when the gap measurement is required. Further, the transmitter 1101 may further send an assistance message.

Specific messages sent by the transmitter 1101 may be an RRCReconfigurationComplete message, an RRCConnectionNogapCapbilityAnswer message, an RRCConnectionReconfigurationComplete message, and the like. This is not limited in this application.

The receiver 1102 may be configured to receive a first message. Specifically, the first message is used to indicate the terminal device to determine the no-gap measurement capability. Further, the first message includes all possible CA combinations, DC combinations, and BWP combinations of the network device, and corresponding measurement objectives. The network device sends the first message, and the terminal device queries the corresponding no-gap measurement capability based on a measurement objective in the first message. If the first message includes only a measurement objective, the terminal device requests or does not request, based on the measurement objective, the network device to configure a gap.

Specific messages received by the receiver 1102 may be an RRCConnetionNogapCapbilitEnquiry message, an RRCConnectionReconfiguration message, and the like. This is not limited in this application.

Further, the terminal device 1100 further includes a processor 1103. The processor 1103 is configured to determine, based on the received measurement objective, whether the terminal device has the no-gap measurement capability.

FIG. 12 is a schematic diagram of another terminal device corresponding to FIG. 11. The terminal device includes a sending unit 1201, a receiving unit 1202, and a processing unit 1203 that respectively correspond to the transmitter 1101, the receiver 1102, and the processor 1103 in FIG. 11 and respectively have a same method and function. Details are not described again in this application.

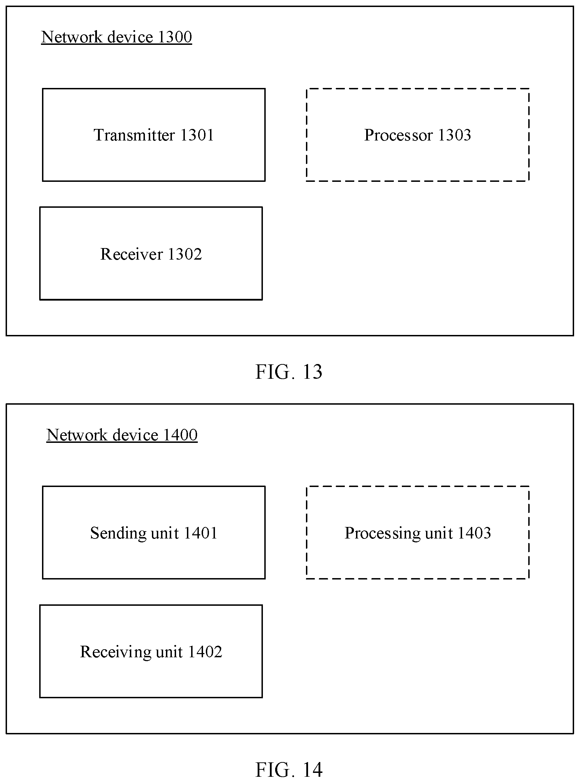

Corresponding to the foregoing embodiment, FIG. 13 is a schematic diagram of a network device according to this application. The network device includes a transmitter 1301, a receiver 1302, and a processor 1303.

The transmitter 1301 may be configured to send a first message. Specifically, the first message is used to indicate a terminal device to determine a no-gap measurement capability. Further, the first message includes all possible CA combinations, DC combinations, and BWP combinations of the network device, and corresponding measurement objectives. The network device sends the first message, and the terminal device queries the corresponding no-gap measurement capability based on a measurement objective in the first message. If the first message includes only a measurement objective, the terminal device requests or does not request, based on the measurement objective, the network device to configure a gap.

Specific messages sent by the transmitter 1301 may be an RRCConnetionNogapCapbilitEnquiry message, an RRCConnectionReconfiguration message, and the like. This is not limited in this application.

The receiver 1302 is configured to receive a second message sent by the terminal device, where the second message is used to indicate the no-gap measurement capability.

Specifically, after separately determining, based on the measurement objectives, whether the terminal device has the no-gap measurement capability, the terminal device uses the second message to carry a corresponding result, and sends the second message to the network device. The second message includes two parts of content: whether gap measurement is required for a current measurement objective, and a gap type when the gap measurement is required. Further, the transmitter 1101 may further send an assistance message.

Specific messages received by the receiver 1302 may be an RRCReconfigurationComplete message, an RRCConnectionNogapCapbilityAnswer message, an RRCConnectionReconfigurationComplete message, and the like. This is not limited in this application.

Further, the processor 1303 in the network device 1300 is configured to process the received second message, to determine a gap allocated to the terminal device.

FIG. 14 is a schematic diagram of another network device corresponding to FIG. 13. The network device includes a sending unit 1401, a receiving unit 1402, and a processing unit 1403 that respectively correspond to the transmitter 1301, the receiver 1302, and the processor 1303 in FIG. 13 and respectively have a same method and function. Details are not described again in this application.

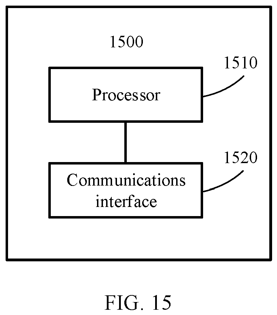

FIG. 15 is a schematic structural diagram of a communications device according to an embodiment of this application. The communications device 1500 in FIG. 15 may correspond to the first network device or the terminal device described above. The communications device 1500 may include at least one processor 1510 and a communications interface 1520. The communications interface 1520 may be used for information exchange between the communications device 1500 and another communications device. When program instructions are executed by the at least one processor 1510, the communications device 1500 is enabled to implement the foregoing steps, methods, operations, or functions performed by the first network device or the terminal device.

A person of ordinary skill in the art may be aware that, in combination with the examples described in the embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing systems, devices, and units, reference may be made to corresponding processes in the foregoing method embodiments, and details are not described herein again.

In the several embodiments provided in this application, it should be understood that the disclosed system, apparatus, and method may be implemented in other manners. For example, the described apparatus embodiments are merely examples. For example, during actual implementation, for some terminal devices in a connected state, a network device may send a multicast or broadcast message carrying a first-type network indication information, so that these terminal devices start measurement on a first-type network cell.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A measurement method, comprising:
receiving, by a first device, a first message sent by a second device, wherein the first message is configuration information and is used by the first device to determine no-gap measurement information or measurement gap type information; and
sending, by the first device, a second message to the second device based on the first message, wherein the second message is used to indicate information about no-gap measurement or type information of a measurement gap.

2. The method according to claim 1, wherein the first message comprises or indicates any one or more of the following:
a carrier combination,
a dual connectivity combination,
an active BWP combination, or
a measurement object.

3. The method according to claim 1 or 2, wherein the type information of the measurement gap is expected measurement gap type information determined by the first device based on the configuration information, and the expected measurement gap type information comprises any one or more of the following:
a gap pattern ID,
a measurement gap length, or
a measurement gap repetition period.

4. The method according to any one of claims 1 to 3, comprising:
when a quantity of component carriers CCs or secondary cell groups SCGs corresponding to the first device is increased or decreased, receiving, by the first device, the first message sent by the second device.

5. The method according to any one of claims 1 to 4, comprising:
receiving, by the first device, a third message sent by the second device, wherein the third message is used to indicate the first device to release a measurement gap.

6. The method according to any one of claims 1 to 5, wherein the method further comprises:
sending, by the first device, a measurement gap release request to the second device, wherein the second message is further used to indicate that the first device expects to release the measurement gap.

7. The method according to any one of claims 1 to 6, wherein the first message is further used to indicate whether the measurement gap can be dynamically activated.

8. The method according to claim 7, wherein the second message is further used to indicate that the first device requests to activate the measurement gap or to deactivate the measurement gap.

9. A measurement method, comprising:
sending, by a second device, a first message to a first device, wherein the first message is configuration information and is used by the first device to determine no-gap measurement information or measurement gap type information; and
receiving, by the second device, a second message, wherein the second message is used to indicate information about no-gap measurement of the first device or type information of a measurement gap of the first device.

10. The method according to claim 9, wherein the first message comprises or indicates any one or more of the following:
a carrier combination,
a dual connectivity combination,
an active BWP combination, or
a measurement object.

11. The method according to claim 9 or 10, wherein the type information of the measurement gap is expected measurement gap type information determined by the first device based on the configuration information, and the expected measurement gap type information comprises any one or more of the following:
a gap pattern ID,
a measurement gap length, or
a measurement gap repetition period.

12. The method according to any one of claims 9 to 11, comprising:
sending, by the second device, the first message when the second device increases or decreases a quantity of component carriers CCs or secondary cell groups SCGs corresponding to the first device.

13. The method according to any one of claims 9 to 12, comprising:
sending, by the second device, a third message to the first device, wherein the third message is used to indicate the first device to release a measurement gap.

14. The method according to any one of claims 9 to 13, wherein the method further comprises:
receiving, by the second device, a measurement gap release request sent by the first device, wherein the second message is further used to indicate that the first device expects to release the measurement gap.

15. The method according to any one of claims 9 to 14, wherein the first message is further used to indicate whether the measurement gap can be dynamically activated.

16. The method according to claim 15, wherein the second message is further used to indicate that the first device requests to activate the measurement gap or to deactivate the measurement gap.

17. A first device for measurement, comprising:
a receiver, configured to receive a first message sent by a second device, wherein the first message is configuration information and is used by the first device to determine no-gap measurement information or measurement gap type information; and
a transmitter, configured to send a second message to the second device based on the first message, wherein the second message is used to indicate information about no-gap measurement or type information of a measurement gap.

18. The first device according to claim 17, wherein the first message comprises or indicates any one or more of the following:
a carrier combination,
a dual connectivity combination,
an active BWP combination, or
a measurement object.

19. The first device according to claim 17 or 18, wherein the type information of the measurement gap is expected measurement gap type information determined by the first device based on the configuration information, and the expected measurement gap type information comprises any one or more of the following:
a gap pattern ID,
a measurement gap length, or
a measurement gap repetition period.

20. The first device according to any one of claims 17 to 19, wherein
when a quantity of component carriers CCs or secondary cell groups SCGs corresponding to the first device is increased or decreased, the receiver receives the first message sent by the second device.

21. The first device according to any one of claims 17 to 20, wherein
the receiver receives a third message sent by the second device, wherein the third message is used to indicate the first device to release a measurement gap.

22. The first device according to any one of claims 17 to 21, wherein the method further comprises:
the transmitter sends a measurement gap release request to the second device, wherein the second message is further used to indicate that the first device expects to release the measurement gap.

23. The first device according to any one of claims 17 to 22, wherein the first message is further used to indicate whether the measurement gap can be dynamically activated.

24. The first device according to claim 23, wherein the second message is further used to indicate that the first device requests to activate the measurement gap or to deactivate the measurement gap.

25. A second device for measurement, comprising:
a transmitter, configured to send a first message to a first device, wherein the first message is configuration information and is used by the first device to determine no-gap measurement information or measurement gap type information; and
a receiver, configured to receive a second message, wherein the second message is used to indicate information about no-gap measurement of the first device or type information of a measurement gap of the first device.

26. The method according to claim 25, wherein the first message comprises or indicates any one or more of the following:
a carrier combination,
a dual connectivity combination,
an active BWP combination, or
a measurement object.

27. The method according to claim 25 or 26, wherein the type information of the measurement gap is expected measurement gap type information determined by the first device based on the configuration information, and the expected measurement gap type information comprises any one or more of the following:
a gap pattern ID,
a measurement gap length, or
a measurement gap repetition period.

28. The method according to any one of claims 25 to 27, wherein
the transmitter sends the first message when the second device increases or decreases a quantity of component carriers CCs or secondary cell groups SCGs corresponding to the first device.

29. The method according to any one of claims 25 to 28, wherein
the transmitter sends a third message to the first device, wherein the third message is used to indicate the first device to release a measurement gap.

30. The method according to any one of claims 25 to 29, wherein the method further comprises:
the receiver receives a measurement gap release request sent by the first device, wherein the second message is further used to indicate that the first device expects to release the measurement gap.

31. The method according to any one of claims 25 to 30, wherein the first message is further used to indicate whether the measurement gap can be dynamically activated.

32. The method according to claim 31, wherein the second message is further used to indicate that the first device requests to activate the measurement gap or to deactivate the measurement gap.

33. A terminal device, comprising a unit configured to perform the method according to any one of claims 1 to 8.

34. A network device, comprising a unit configured to perform the method according to any one of claims 9 to 16.

35. A computer storage medium, wherein the computer storage medium stores program code, and the program code is used to indicate to perform the method according to any one of claims 1 to 16.

36. A communications device, comprising at least one processor and a communications interface, wherein the communications interface is used for information exchange between the communications apparatus and another communications apparatus, and when program instructions are executed by the at least one processor, the communications device is enabled to implement a function of a terminal device or a network device in the method according to any one of claims 1 to 16.
